# EUROPEAN PATENT APPLICATION

(11) **EP 1 477 430 A1**
(43) Date of publication of application: **17.11.2004**
(21) Application number: 03701100.4
(22) Date of filing: 16.01.2003
(51) Int. Cl.: B65F 5/00, G06F 17/60, B09B 5/00, G06K 19/06

(54) **WASTE TREATMENT INFORMATION MANAGEMENT SYSTEM**

(30) Priority: 17.01.2002 JP 2002009214
(71) Applicant: Nisscom Corporation, Shinjuku-Ku, Tokyo 169-0073 (JP)
(72) Inventor: OGAWA, Mitsuaki, c/o NISSCOM CORPORATION, Shinjuku-Ku, Tokyo 169-0073 (JP)
(74) Representative: Leson, Thomas Johannes Alois, Dipl.-Ing.
(86) International application number: PCT/JP2003/000312
(87) International publication number: WO 2003/059788

(57) **Abstract**

Individual management with a high reliability is performed on a container for wastes under special control or a vehicle carrying the container so as to suppress improper treatment, such as loss of the container by a mistake or illegal disposal, during transportation of the wastes under special control, and to exactly and promptly detect and cope with false treatment if occurs.

A waste treatment information management system collects information on the flow of waste treatment using satellite communication, thereby enabling management of the waste treatment among a waste generating facility, a waste collecting company, and a waste treating company, and thereby rapidly preparing and providing necessary information from the information collected. The system is characterized by use of combination of a two-dimensional barcode label and a cargo bill where necessary items are described according to the related information including the two-dimensional barcode, which has been input to a terminal for the satellite communication.

## Description

### Technical Field

The present invention relates to a waste treatment information management system using a communication satellite, which tracks and records the process from recovery of wastes to transportation and treatment of the recovered wastes. More particularly, the present invention relates to a waste treatment information management system in which a two-dimensional barcode is attached to a container containing wastes in a sealed way or a waste transporting vehicle carrying the container so that individual management is realized from collection of the wastes to treatment/disposal thereof for each container or each waste transporting vehicle.

The present invention is applied to wastes to be handled under special control, i.e., general wastes to be handled under special control, such as PCB and equipment using PCB, smuts, and infectious general wastes, and industrial wastes to be handled under special control, such as waste oil, waste acids, waste alkalis, infectious industrial wastes, and classified harmful industrial wastes. While the following description of the present invention is made of, by way of example, infectious wastes discarded, as wastes to be handled under special control, primarily from medical institutions, it is needless to say that the present invention is also similarly applicable to other types of the above-mentioned wastes under special control and ordinary industry wastes.

### Background Art

Particular wastes, e.g., wastes under special control discarded from hospitals (infectious wastes), which have a potential risk of spreading pathogenic bacteria, such as used syringe needles and bloody gauzes, are legally obligated to be treated separately from general wastes. For the reasons of disliking the burden of labor and cost, however, the case of mixing those particular wastes in general wastes and throwing away them, as they are, continues even now. Furthermore, a large amount of waste materials, etc. are generated at a time in the building site, and a difficulty in ensuring a disposal place for those waste materials has also raised the problem of illegal dumping.

In such situations, the flow of treatment of infectious wastes has been divided into two ways in the past, i.e., primary one where a collecting/transporting company brings the wastes to a treating company, and the other where one company handles collection, transportation and intermediate treatment of the wastes together. In any way, the waste treatment is performed according to contracts (agreed among three companies or between two), and details of the contracts differ case by case. With enforcement of a new industrial waste management list system since April 1, 2001, a cargo bill (hereinafter referred to also as a "manifest bill") has been employed as legal obligation, but its use in the practical field still stands within the frame of a conventional invoice in many cases, which has been employed in the past.

Also, on the side of waste generating facilities, the consciousness in handling the infectious wastes remains at a level not differing from that in regions handling industrial wastes or general wastes. In other words, the consciousness is not beyond the viewpoint of how much yen is evaluated as the cost of the infectious wastes discarded from the facility per month. The consciousness is represented by categories whether the amount of payment for treatment is large or small, and whether the treatment cost is high or low. At such a level of the consciousness, proper treatment of the infectious wastes cannot be expected.

Further, even when trying to quickly accelerate management of the treatment of the infectious wastes, which has been developed from the conventional waste treatment, based on data such as net weight for each waste generation source, there are problems in how the data is accumulated, who manages the data, and where and how the data is stored. With introduction of the manifest bill, necessary data is obtained to some extent. However, the obtained data is only per waste generating facility, and it is very difficult to collect data including the , waste generation source and net weight of the infectious wastes.

The wastes under special control have potentiality imposing adverse effects upon human bodies and environments, and should be all treated in a reliable and proper manner. Hitherto, the wastes under special control, including medical wastes, have been distinguished from other general wastes and conveyed over a dedicated treatment route under special control. Then, waste management has been performed by checking the number of sealed-off containers transferred during collection and transport, or by checking the number of waste transporting vehicles in the case where a large amount of wastes are generated at a time, such as waste materials generated in the building field.

For example, by using a dedicated bill prepared per hospital that is a waste generation place and a waste collection place, the number of sealed-off containers is checked per waste collection place at the time of carrying-out from the waste collection place and at the time of carrying-in to a disposal/treatment facility. With the management of the number of sealed-off containers in units of group using the bill, however, it is impossible to confirm more details including the flow of individual sealed-off containers. In the event that the sealed-off container containing the wastes to be treated and disposed of under special control is replaced with another container containing general wastes, etc. by an intention or a mistake during transportation, for example, it is difficult to find such replacement at the time of check.

To overcome the above-mentioned problem, as one of systems for preventing illegal dumping of industrial wastes, Japanese Patent Laid-Open Publication 9-142609, entitled "Industrial-Waste Disposal and Management Information System", proposes a waste disposal and management information system for monitoring dynamic situations of industrial-waste transporting vehicles by utilizing satellite communication and the GPS (Global Positioning System).

With the proposed system, a management terminal receives position information of the waste transporting vehicle, which is computed by an onboard terminal of the waste transporting vehicle based on electric waves received from a GPS satellite, monitors the transport state of the waste transporting vehicle based on the received position information, and further monitors arrival of the waste transporting vehicle to a waste disposal site, i.e., a final destination of the transport route. Therefore, the proposed system is able to monitor travel situations and loading/unloading situations of the individual waste transporting vehicles, but is not intended to monitor the particulars of the loaded wastes and disposal situations.

In consideration of the above, the inventor has already developed and proposed "Waste Collection and Disposal Information System" (Japanese Patent Laid-Open Publication 10-95505, referred to as "SCMS" (Satellite Communication Management System) hereinafter) utilizing the global positioning system (GPS), SCMS II (Japanese Patent Laid-Open Publication 10-95506) that is an improved version of SCMS, i.e., a system for monitoring and preventing general wastes from being carried into an incineration facility not designated (public incineration site outside a specific area), as well as SCMS III that has improved communication systems of SCMS and SCMS II.

To explain SCMS in more detail, it is a system for monitoring a flow of waste disposal by collecting information using satellite communication so that waste disposal steps carried out by a waste generating facility, a collecting/transporting company and an intermediate treating company can be managed, and for rapidly preparing and providing necessary information from the collected information. Thus, SCMS is a system for managing works and travel of waste transporting vehicles by monitoring a flow of waste disposal while collecting information using satellite communication so that waste disposal steps carried out by a waste source company, a collecting/ transporting company and an intermediate treating company can be managed, and for rapidly preparing and providing necessary information from the collected information.

Specifically, SCMS is a system for managing works and travel of waste transporting vehicles with satellite communication by employing a barcode label and a cargo bill in a combined manner, the cargo bill containing necessary items put on it based on related information, including barcode information, which has been input to a terminal for the satellite communication. Stated otherwise, SCMS is a system for managing works and travel of vehicles for transporting wastes under special control with the satellite communication by employing a barcode label and a cargo bill in a combined manner, the cargo bill containing necessary items put on it based on related information, including barcode information, which has been input to a terminal for the satellite communication.

Furthermore, SCMS is a waste disposal information system for monitoring a flow of waste disposal while collecting information using satellite communication so that waste disposal steps carried out by a waste generating facility, a collecting/transporting company and an intermediate treating company can be managed, and for rapidly preparing and providing necessary information from the collected information, wherein the system employs a barcode label and a cargo bill in a combined manner, the cargo bill containing necessary items put on it based on related information, including barcode information, which has been input to a terminal for the satellite communication.

In short, SCMS is an information system for disposal of wastes under special control utilizing satellite communication, wherein a barcode label and a cargo bill are employed in a combined manner, the cargo bill containing necessary items put on it based on related information, including barcode information, which has been input to a terminal for the satellite communication.

Those systems have been developed for collecting and managing wastes under special control (including not only classified or general wastes that are explosive, toxic or infectious and possibly hurt human health and living environments, but also general or other wastes that are generated in large amount and may give rise to a substantial influence from the viewpoint of environment pollution when dumped). In the present invention, information is collected from monitoring dynamic situations of the waste transporting vehicles instead of reading of the barcode. As a matter of course, information collection may be performed by utilizing both types of information in combined use or utilizing one type of information for supplemental purpose.

SCMS II is an improved version of SCMS and intends to collect information based on information directly indicating dynamic situations of the waste transporting vehicles instead of reading a barcode in SCMS. Such information collection can be realized with SCMS II by setting an onboard terminal for satellite communication, which is used in SCMS, in each of permitted waste transporting vehicles and then doing works in the same manner as in SCMS.

More specifically, information regarding dynamic situations of the waste transporting vehicle is collected by adding, to each waste transporting vehicle used in SCMS, the function of sensing actuation of a loading device with a sensor at the time of loading wastes on the vehicle and then transmitting sensed information to an SCMS management center via a communication satellite, the function of sensing dumping or unloading operation performed for disposal of the wastes that have been carried into an incineration facility, and then transmitting sensed information to the SCMS management center via the communication satellite, etc.

Waste management in accordance with SCMS and SCMS II is automatically performed at the SCMS management center using the satellite communication system. Data regarding when and where the waste transporting vehicle has collected wastes and when and where the waste transporting vehicle has unloaded the collected wastes, etc. is obtained by the SCMS management center via the satellite communication system. The obtained data is automatically subjected to matching work with a computer so as to check whether the obtained data is matched with the preset management information and conditions. Thus, SCMS and SCMS II are able to prevent illegal dumping of wastes by monitoring the occurrence of problems such as "waste dumping at improper places", "waste dumping outside designated area", and "improper mixing of wastes".

In SCMS and SCMS II, information is exchanged between the waste transporting vehicles and the management center using the satellite communication system. However, the satellite communication is disadvantageous in that the communication charge is relatively high and economical burdens upon users are increased. On the other hand, Dopa communication (e.g., packet communication provided by NTT-Docomo in Japan) requiring communication charge lower than the satellite communication has been practiced in recent years. With the Dopa communication, however, communication between the waste transporting vehicle and the SCMS management center cannot be established when the waste transporting vehicle is located in a communication-disabled area.

In view of the above, the inventor has previously proposed a system (SCMS III) in which communication between the waste transporting vehicle and the SCMS management center is performed using both the Dopa communication and the satellite communication in such a manner that the communication between them is established via the satellite communication in an area where the Dopa communication is disabled, but is established via the Dopa communication in an area where the Dopa communication is enabled.

### Disclosure of the Invention

In the above-described systems, however, data regarding the generation place and the collection place of the wastes under special control is recorded using a one-dimensional barcode, and therefore a limitation exists in recording additive information regarding the wastes under special control. Meanwhile, a two-dimensional barcode has been proposed recently, and it is formed by compressing an ordinary one-dimensional barcode in both vertical and horizontal directions into a thin stripe, and arraying 10 or more stripes side by side. The two-dimensional barcode is advantageous in a capability of recording information in a larger number of items.

With the above-mentioned state of the art in mind, the present invention provides a waste treatment information management system employing a communication satellite, the system collecting information on a flow of waste treatment using satellite communication, thereby enabling management of the waste treatment among a waste generating facility, a collecting/transporting company, and a treating company, and thereby rapidly preparing and providing necessary information from the information collected, wherein a two-dimensional barcode label and a cargo bill are employed in a combined manner, the cargo bill containing necessary items described therein according to the related information including the two-dimensional barcode, which has been input to a terminal for the satellite communication.

In other words, the present invention provides an information system which can implement individual management with a high reliability on a sealed-off container for wastes under special control or a waste transporting vehicle so as to suppress improper treatment such as loss of the sealed-off container by a mistake or illegal disposal during transportation, and to exactly and promptly detect and cope with false treatment if occurs, and which can track and record the process from recovery of the wastes under special control to transport and treatment of the recovered wastes. Particularly, the present invention provides a collection and disposal information management system for performing individual management on each of the containers or the waste transporting vehicles from collection of the wastes to disposal thereof, wherein the two-dimensional barcode is attached to the container in which the wastes under special control is sealed off or the vehicle carrying the container, and preferably a mark representing the wastes under special control is indicated near the two-dimensional barcode, thus clarifying that the contents of the container are the wastes under special control. Further, the present invention provides a treatment information management system for the wastes under special control, which is capable of handling high- density information.

In short, the present invention provides a treatment information management system for the wastes under special control, which utilizes satellite communication, wherein a two-dimensional barcode label and a cargo bill are employed in a combined manner, the cargo bill containing necessary items described therein according to the related information including the two-dimensional barcode, which has been input to a terminal for the satellite communication.

### Brief Description of the Drawings

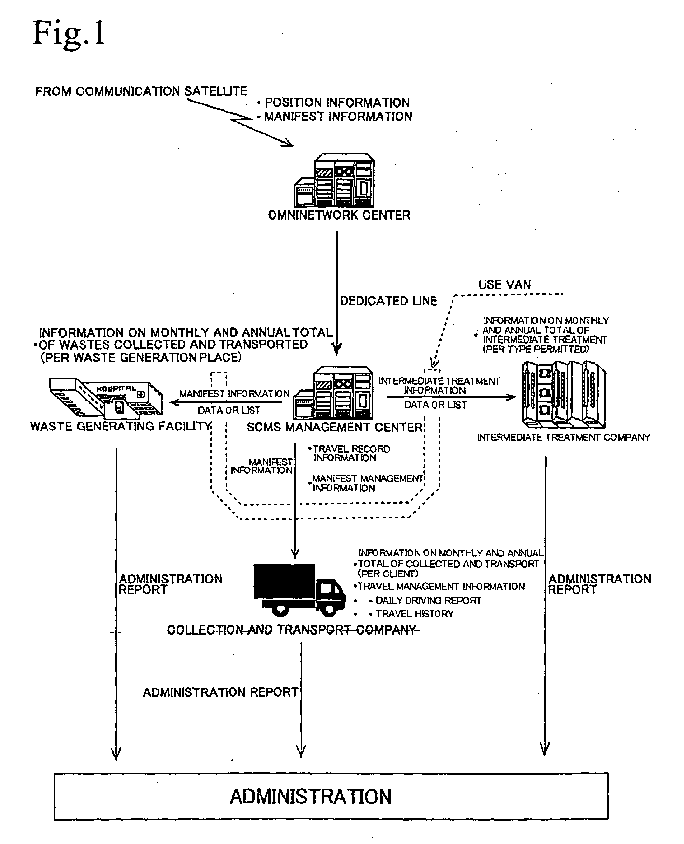

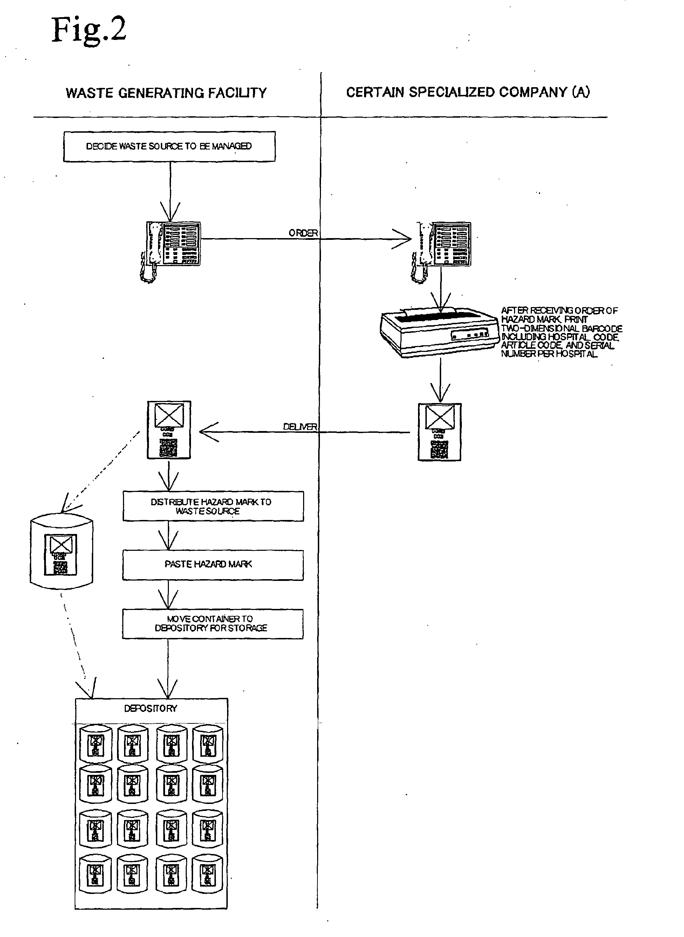

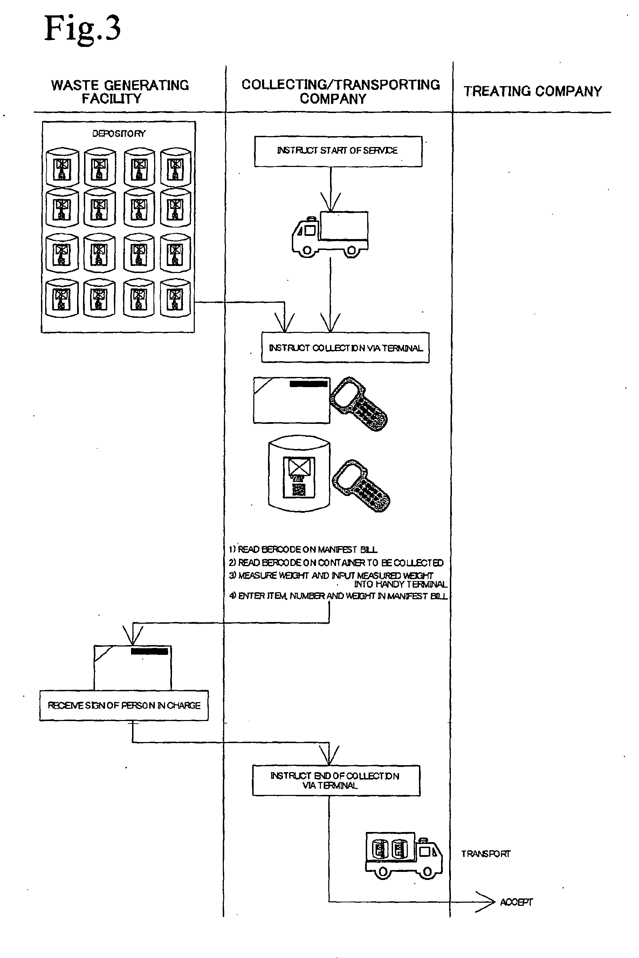

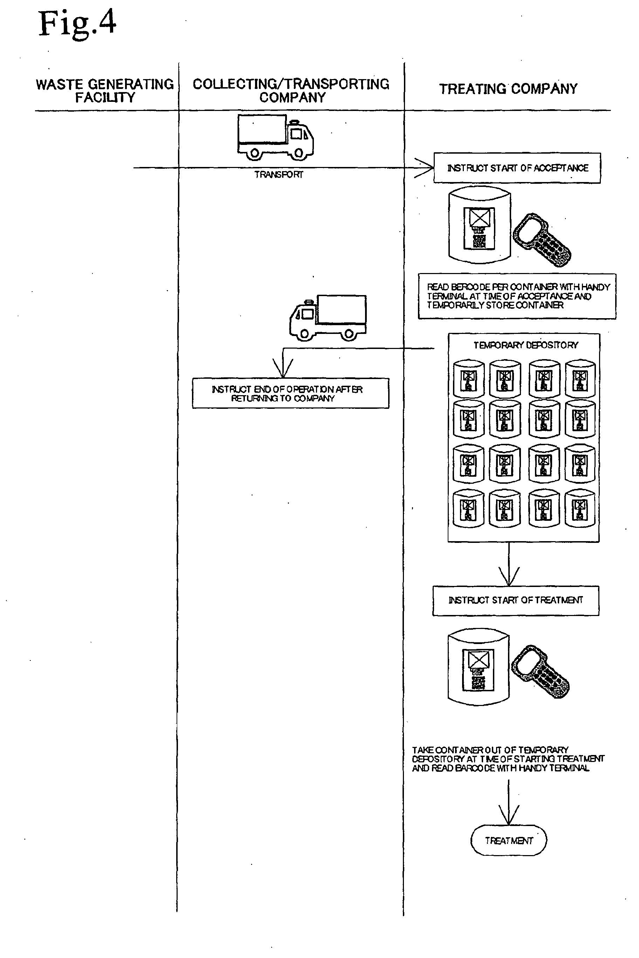

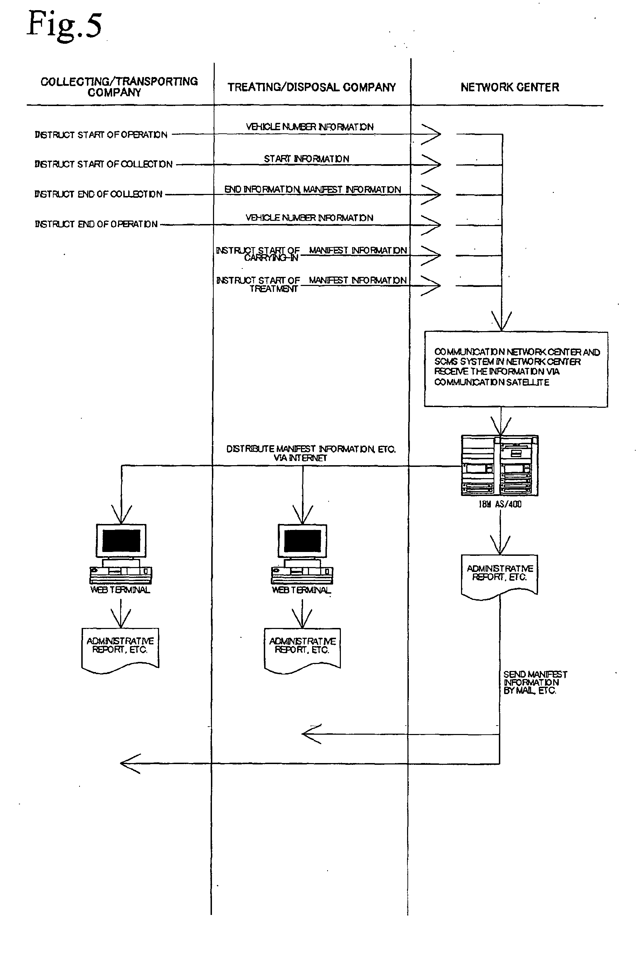

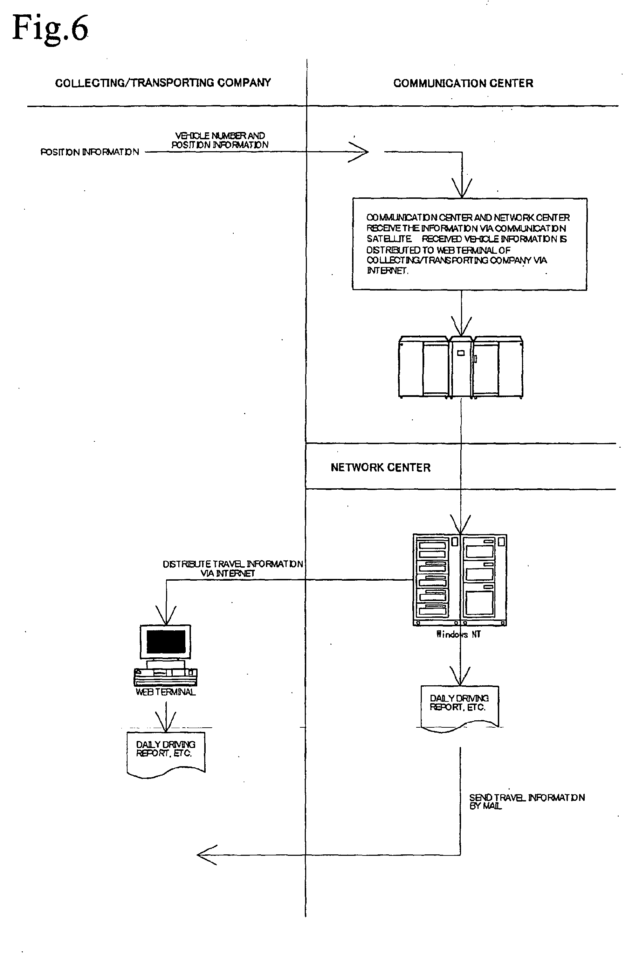

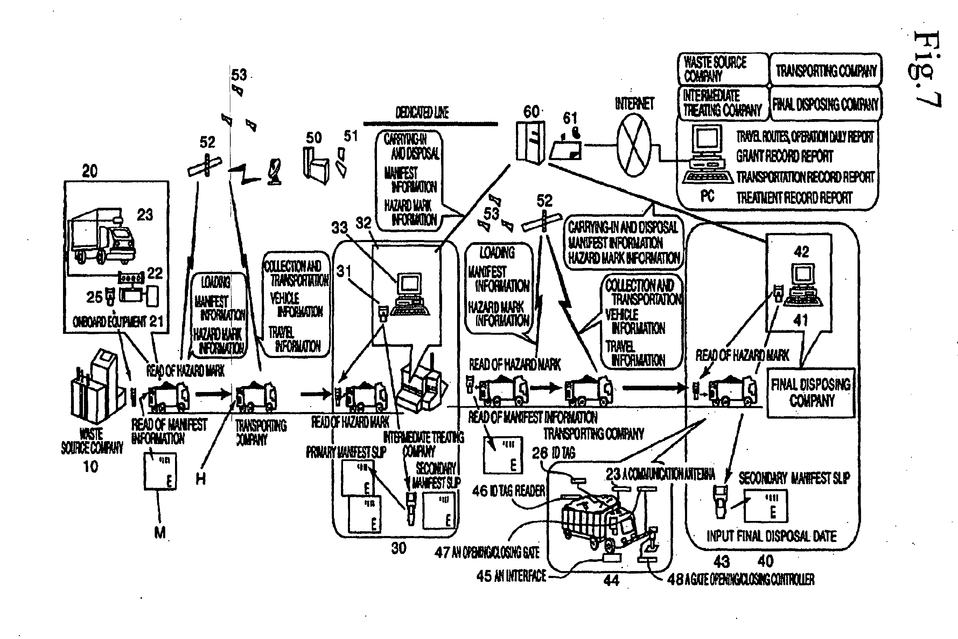

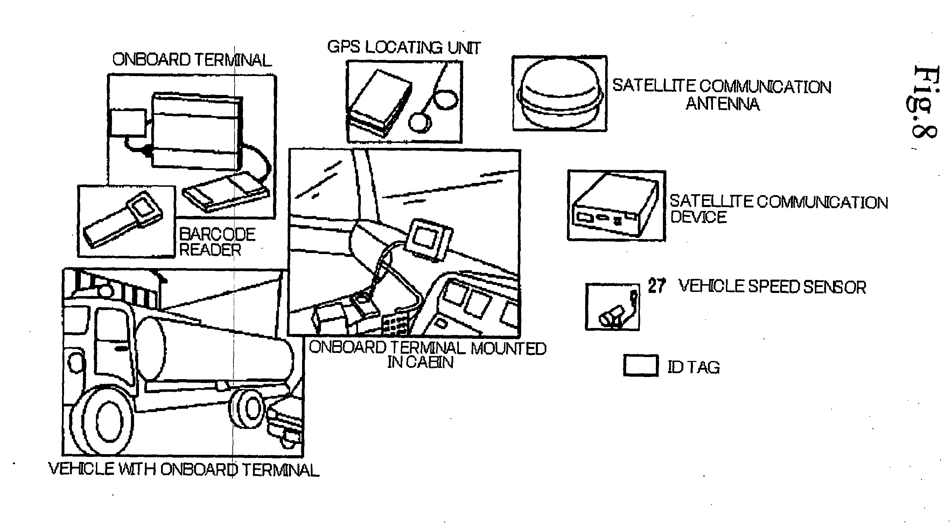

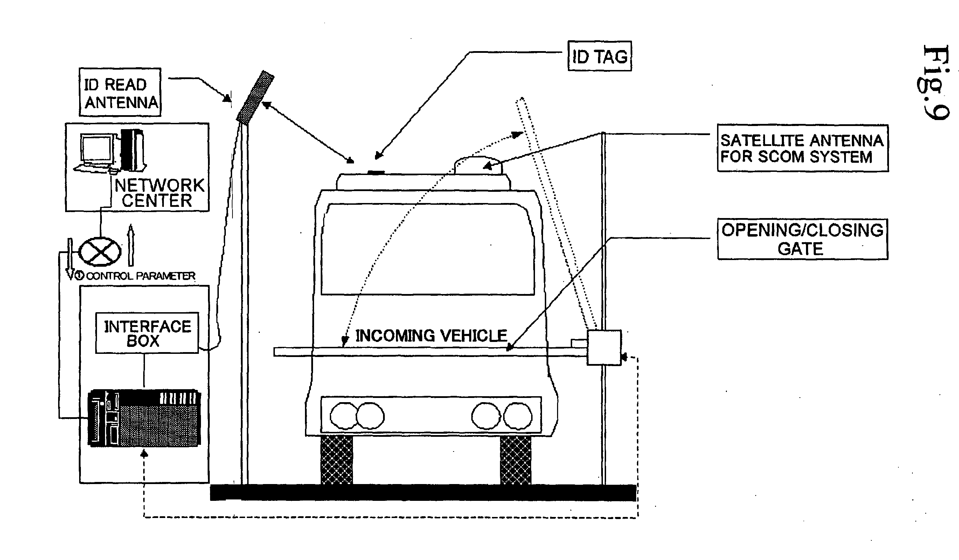

Fig. 1 is a diagram for explaining an outline of an SCMS (Satellite Communication Management System), and Fig. 2 is a diagram for explaining an outline of the operation flow in a waste generating facility. Fig. 3 is a diagram for explaining an outline of the operation flow related to a collecting/transporting company; Fig. 4 is a diagram for explaining an outline of the operation flow related to an intermediate treating company; Fig. 5 is a diagram for explaining an outline of the operation flow (manifest) in a management center; and Fig. 6 is a diagram for explaining an outline of the operation flow (travel management) in the management center. Fig. 7 is a diagram for explaining an outline of the system and flows of information, Fig. 8 shows a set of onboard equipment, and Fig. 9 is a detailed view of a gate management system in a final disposal site.

### Best Mode for Carrying out the Invention

In the present invention, a two-dimensional barcode label prepared in advance and representing data regarding a collection place and a generation place is attached in the collection place to each of a plurality of containers containing wastes under special control and one or more waster transporting vehicles each carrying the containers. Before starting collection and carrying of the plurality of containers or starting travel of the waster transporting vehicles out of the collection place, data of the two-dimensional barcode label attached each container or each waster transporting vehicle is read with a barcode reader for each container or each waster transporting vehicle. Further, the weight of each container or each waster transporting vehicle is measured. The information thus read and measured is then input to a terminal for satellite communication.

A cargo bill (manifest bill) containing necessary items described therein according to the information of the two-dimensional barcode, which has been input to the terminal for the satellite communication, is received. Travel information from departure to return is automatically recorded via the satellite communication. A travel management system based on the omni TRACS for recording position information and travel routes, automatically preparing daily driving reports, etc. can be employed.

After transporting the plurality of containers or driving one or more waster transporting vehicles from the collection place to an intermediate treatment place, a treating company reads again the data of the two-dimensional barcode label attached to each container or each waster transporting vehicle, and transmits the read data to a manifest management center together with information of the treatment date. The wastes under special control are temporarily stored in a factory of the treating company until intermediate treatment. At the time of performing the intermediate treatment of the stored wastes under special control, including infectious wastes therein, the two-dimensional barcode is read again and transmitted to the manifest management center together with information of the treatment date.

The manifest management center receives the above-mentioned data regarding the individual containers and waster transporting vehicles, i.e., the data obtained at the time of the collection by the collecting/transporting company and the data obtained from the treating company at the time of the carrying-in and the intermediate treatment, and checks those data obtained at the time of the collection, the carrying-in and the intermediate treatment. If there is a mismatch in the received data, the manifest management center prints out the relevant data to notify the companies concerned of the mismatch and to instruct them to make confirmation.

The two-dimensional barcode label is a label prepared in advance to indicate a two-dimensional barcode representative of data regarding the collection place and the generation place and attached to the container for the wastes under special control or the waste transporting vehicle. Data of the measured weight of each container or each waste transporting vehicle can be input together with the information of the two-dimensional barcode.

Preferably, the two-dimensional barcode label includes a mark positioned near the two-dimensional barcode and representing the wastes under special control. The mark representing the wastes under special control is a mark representing infectious wastes. The mark is preferably a bio-hazard mark. It is stipulated that a carrying container containing infectious wastes must be given with a label indicating the contents being the infectious wastes and notes to be taken care of when handling the container. Also, it is recommended to use the bio-hazard mark as a mark common to the whole land of Japan.

In order to make use of the treatment information management system for the wastes under special control while utilizing the satellite communication, when a hospital, for example, discards medial wastes, a two-dimensional barcode seal recording thereon the hospital name, the department, etc. is pasted to each collection container. The waster transporting vehicle is equipped with a barcode reader for reading two-dimensional barcodes, and data of the two-dimensional barcode is read for recording whenever each container is loaded on the vehicle. During transportation, the position of the waster transporting vehicle is confirmed at intervals of 30 minutes via the satellite communication. When the container is carried into an intermediate treatment factory and when sterilization, incineration or the like of the wastes is completed, the two-dimensional barcode of the collection container is read again for recording.

The obtained data is all recorded in a mainframe computer via the satellite communication and then informed to the hospital, the collecting company, and the treating company. If the collection container is missed or the waster transporting vehicle shows suspicious motions during transportation, such an event can be noticed at once and hence illegal disposal can be prevented. Also, travel management is easier to perform, and efficiency in collecting the wastes is increased. It is stipulated that medical wastes having a risk of virus infection, etc. must be handled separately from general wastes and subjected to final disposal after sterilizing or incinerating them for disablement of the infection. A management bill, called a manifest (bill), is affixed to the wastes, and proper treatment of the wastes is confirmed by the hospital and the handling company both checking the bill.

Operations to be performed by each of parties engaged in the system of the present invention will be described below. While the following description is made of infectious wastes discarded from medical institutions, it is a matter of course that the present invention is similarly applicable to any of other all wastes under special control.

Embodiment 1: The mode in use of the treatment information management system for the wastes under special control, which utilizes the communication satellite, is described in this embodiment.

The manifest used in the present invention is managed as follows:
1. The waste generating facility enters necessary items in a manifest consisted of seven copies and puts a sign on it. Then, the waste generating facility hands over all the seven copies to the collecting/transporting company together with the wastes under special control.
2. Upon receipt of the wastes under special control, the collecting/transporting company puts a sign in a predetermined column of the manifest, and hands over one of the seven copies to the waste generating facility.
3. The waste generating facility keeps the one copy returned from the collecting/transporting company for storage.
4. The collecting/transporting company hands over the remaining six copies to the treating company together with the wastes under special control.
5. Upon receipt of the wastes under special control, the treating company puts a sign in a predetermined column of the manifest, and hands over two of the six copies to the collecting/transporting company.
6. The collecting/transporting company keeps the one of the two copies returned from the treating company for storage, and sends the other copy to the waste generating facility.
7. When disposal of the wastes under special control is completed, the treating company puts a sign in a predetermined column of the manifest and keeps one of the remaining four copies for storage, followed by sending one copy to the collecting/transporting company and another one copy to the waste generating facility. The remaining one copy is left at the hand of the treating company for making a report when final disposal is completed.
8. When the manifest is returned after completion of the final disposal, the treating company enters the final disposal date in the manifest having been kept for the waste generating facility and sends it to the waste generating facility.
9. The waste generating facility collates the manifest returned from the treating company with the manifest kept at the waste generating facility, and checks whether the requested disposal of the wastes under special control has been performed as instructed.

### <<Waste Generating Facility>>

Fig. 2 shows an outline of the operation flow in the waste generating facility.
1. A code is set per each of waste sources to be managed. (In response to an order from the waste generating facility, a two-dimensional barcode is prepared and delivered in each management department.)
2. The prepared two-dimensional barcodes are delivered to the respective waste sources. A label employed here includes a mark and the two-dimensional barcode arranged side by side. The mark clearly indicates the fact that infectious wastes are contained.
3. The two-dimensional barcode label is pasted to each container in the place of the waste source.
4. When the container is filled with the infectious wastes, the container is carried to a depository in the waste generating facility and stored there.

### <<Collecting/Transporting Company>>

Fig. 3 shows an outline of the operation flow related to the collecting/transporting company.
1. It routinely collects wastes.
2. When collecting containers, information of a two-dimensional barcode is read with a barcode reader for each container.
3. The weight of each container is measured.
4. Several items of information are input to a terminal (handy terminal) for the satellite communication.
5. It receives a manifest bill.
6. Information regarding travel from departure to return is automatically recorded via the satellite communication. A travel management system based on the omni TRACS for recording position information and travel routes, automatically preparing daily driving reports, etc. can be employed.
7. When mismatch between collection/transportation and carrying-in is notified from the manifest management center, the collecting/transporting company or the waste generating facility confirms the notified mismatch and makes clear the cause.

### <<Treating Company>>

Fig. 4 shows an outline of the operation flow related to the treating company.
1. When the infectious wastes are carried into the treating company by the collecting/transporting company, data regarding the carried-in infectious wastes is read with a barcode reader for each container.
2. The infectious wastes are temporarily stored in a factory until the intermediate treatment is performed.
3. When the stored infectious wastes are subjected to the intermediate treatment, the two-dimensional barcode is read again and information regarding the treatment date is transmitted to the system.
4. When any mismatch is notified from the management center, the treating company or the collecting/transporting company confirms the notified mismatch and makes correction of the data.
5. Vehicle travel management data is provided to all parties concerned.

### <<Management Center (satellite system installed company, SCMS management center in Figs. 1 and 6)>>

Fig. 5 shows an outline of the operation flow in the management center, and Fig. 6 shows an outline of the operation flow (travel management) in the management center.
1. It receives, via a communication satellite, the data obtained at the time of waste collection by the collecting/transporting company.
2. It takes in, from the treating company, the data regarding carrying in of the wastes to the treating company and the intermediate treatment of the wastes therein.
3. It checks the received data regarding the collection, carrying-in and treatment of the wastes. If there is any mismatch, the center prints out the mismatch data and notifies it to the concerned companies for confirmation.
4. When the confirmation in above 3 is not made, the center notifies the matter to the relevant administration or the waste generating facility, and instructs all of the parties concerned to make clear the cause.
5. The obtained data, risk information, etc. are distributed to the waste generating facility, the collecting/transporting company, and the administration via a Web site of the management center.

### <<Administration (state, metropolis and districts)>>

1. The administration is able to manage actual situations of the collection, transportation, and intermediate treatment of the infectious wastes in real time by obtaining information of the infectious wastes through online data exchange between the system of the management center and a ground management system of the administration.
2. Because of reliable and simple management of the infectious wastes, the necessity of presenting administrative reports is eliminated and management works are simplified.
3. With omission of administrative reports from the waste generating facility and the treating company, there is no necessity of storing those reports, whereby management works are further simplified.
4. It is possible to easily make check of manifests that have been prepared by the waste generating facility and the other companies, the check being hardly performed at present. Therefore, management, storage, etc. of the administrative reports are simplified.

Equipment constituting the system of the present invention will be described below.
1. Onboard equipment (per waste collecting and transporting vehicle) Onboard communication device (with a built-in GPS locating system) Handy terminal and barcode reader
2. Center equipment (for JQTRACS) - for management company FMS server
   Travel management universal software (FMS)
   Dedicated terminal PC (Client terminal PC)
   FEP distribution control routine
   Interface and communication software
   Data entry screen customizer
   Ground communication equipment (for communication with Yokohama network center
3. Equipment in intermediate treating factory
   Communication device (with a built-in GPS locating system)
   Handy terminal and barcode reader
   Communication adaptor
   Dedicated terminals (two in total, i.e., one for carrying-in to factory) and one for intermediate treatment

Embodiment 2 Functions and Specifications of Portable Terminal: The functions and specifications of a portable terminal in the onboard equipment, which is employed in the SCM system for collection and management of wastes will be described below. Fig. 7 shows a setup of the onboard equipment. Other devices than the portable terminal are always loaded on the vehicle and have the following functions:
1. GSP antenna for receiving signals from a GPS satellite and transmitting position information of the vehicle to a satellite communication device
2. Satellite communication antenna for transmitting and receiving signals with respect to a communication satellite
3. Satellite communication controller for controlling two-way communication with respect to the communication satellite
4. Onboard terminal for collecting various information of wastes (regarding collection, carrying-in, treatment, etc.), transferring the collected information to a portable terminal communication device (BHT, two-dimensional barcode handy terminal), displaying information from the portable terminal and travel information from the vehicle, followed by transmitting those information to the satellite communication controller, and displaying information transmitted from a command station (office)
5. Portable terminal device for transmitting various kinds of information necessary for management to an onboard display terminal.

The travel confirming operation for the vehicle transporting the wastes under special control according to the system of the present invention will be described below.

The ID code, the scheduled travel route, etc. provided for each vehicle transporting the wastes under special control are input to the onboard terminal and transmitted to the SCMS management center via a communication line. Of the input information, the items required for management and surveillance are sent to terminals of other institutions concerned as well via a communication line.

The onboard terminal of the vehicle transporting the wastes under special control receives a signal from the GPS satellite, computes the position of the vehicle itself from the received signal, and transmits information of the computed position and the ID code assigned to the vehicle to a packet station and the communication satellite from the transmission antenna. The transmitted information is relayed by the packet station and the communication satellite, and then sent to the system management center 1. The system management center 1 records the received information in a magnetic recording device and transmits necessary information to the concerned institutions.

A management terminal installed, for example, in the owner or the company possessing the vehicle transporting the wastes under special control monitors the position of the vehicle transporting the wastes under special control based on the position information that has been received by the system management center and sent to the owner or the company via the communication line. On the other hand, upon receiving the transmitted information, a management terminal installed in the system management center recognizes the position information and the ID code of the vehicle, displays the position information and the ID code on a display along with a map of the transport route, and records them in a magnetic recording device.

The position information and the ID code are transmitted to a management terminal installed, for example, in a company to which the owner of the vehicle transporting the wastes under special control. The management terminal installed in the company, for example, receives the transmitted information, i.e., the position information and the ID code, and records them in a magnetic recording device along with the map of the transport route.

A description is now made of how the treatment information management system for the wastes under special control, which utilizes the satellite communication, operates with respective functions in each of the waste generating facility, the collecting/transporting company, the treating company, the management center (i.e., the satellite system installed company, for example, the SCMS management center in this embodiment), and, as required, the administration.

### << Waste Generating Facility>>

By managing the amount of wastes generated for each source in the waste generating facility based on the feature of the present invention, i.e., the combined use of a two-dimensional barcode label and a cargo bill containing necessary items described therein according to the related information including the two-dimensional barcode, which has been input to the terminal for the satellite communication, the infectious wastes can collected in a manner separated per waste source with higher certainty, and numerical management can be performed in terms of net weight for each department of the facility and each kind of contents. Management per department ensures separation of ordinary wastes, etc. which are mixed in the infectious wastes at present, and hence contributes to realizing a reduction in amount of the infectious wastes.

With the numerical management per department, the waste generating facility can effectively use the numerical results in not only preparing the budge for each waste source in the facility, but also comparing the income with the treatment cost of the infectious wastes per department. After the waste generating facility has delivered the infectious wastes to the collecting/transporting company, it is possible to confirm in real time where the individual containers of the delivered infectious wastes locate, at which point they are transported, when they were delivered to the treatment factory, when they were treated, and where they are stagnant. Thus, the waste generating facility can confirm situations of the infectious wastes commissioned for treatment, and therefore can sufficiently fulfill the management responsibility required for itself as a waste source.

By extracting and transferring data required for administrative reports from the information obtained from a series of the waste treatment information management system, that data can be used to prepare an annual administrative report. The system can be operated at a treatment cost within the current treatment commission cost. The backup data of the obtained information is preserved for five years. By designating the date and the vehicle code, the system can clearly show the track and time on the map, thus allowing any concerned party to confirm at what time and where the relevant waste transporting vehicle was present, and through which route the vehicle transported the wastes to the treatment factory. With the construction and implementation of such a system, it is possible to prevent illegal treatment, including illegal disposal, and improper treatment under responsibility of the waste generating facility.

### <<Collecting/Transporting Company>>

The collecting/transporting company can also manage the infectious wastes as with the waste generating facility. Further, with the individual management, even if a violent poison or an harmful substance is mixed at the waste source in the infectious wastes by a mistake, the relevant waste source can be specified, an accident such as an explosion or gas generation can be avoided, and illegal discarding of wastes by the waste generating facility can be prevented (at present, when a toxic reagent, e.g., mercury, is mixed in the infectious wastes, the waste generating facility having discarded it cannot be specified).

Moreover, since the track of each waste transporting vehicle is periodically automatically recorded based on the position information of the waste transporting vehicle via the communication satellite, the travel management can be effectively performed and a daily driving report can be automatically formed by the system, thus resulting in effective management of employees and savings of labor. In addition, since communication with the employees engaged in collecting and transporting the wastes can be made at any time via the communication satellite, it is possible to confirm the field situations, to save labor required in the management department, and to increase the efficiency in collection and transportation.

### <<Treating Company>>

The treating company can also manage the infectious wastes as with the waste generating facility and the collecting/transporting company. At present, a two-party contract is often agreed between the waste generating facility and the collecting/transporting company - the treating company. More specifically, the collecting/transporting company makes selling activities and finds a waste generating facility (new customer). Then, the collecting/transporting company contacts the treating company under cooperation for agreement with the new business on one side, and enters into the two-party contract with the waste generating facility under initiative of the collecting/transporting company. In such a case, if the collecting/transporting company carries the collected and transported wastes, as they are, to the treating company, there occur no problems. It is, however, a current situation that, to cut the intermediate treatment cost, some of the collecting/transporting companies performs illegal treatment by repacking the collected and transported infectious wastes in the company site (e.g., by a method of compressing two packs into one or a method of mixing the infectious wastes in general wastes and bringing them, as industrial wastes, to a public incineration facility). The present system can solve that problem of illegal disposal.

### <<Administration (state, metropolis and districts)>>

The administration is able to confirm movement and situations of the infectious wastes handled by the waste generating facility, the collecting/transporting company, and the treating company in a precise and real-time way. Since the present system is adaptable for docking with a ground management system presently under research and development by public institutions, it is expected for the administration to realize facilitation in check of reports submitted to the administration from all of the waste generating facilities, effective management and surveillance for illegal disposal, illegal treatment, etc. made by any of the facilities and companies, and labor savings and precise management in check of the three parties, the waste generating facility, i.e., the collecting/transporting company, and the treating company.

Further, although each organization (i.e., the waste generating facility, the collecting/transporting company, and the treating company) is obliged to submit the annual administrative report, it is current situation that report data sent from all the organizations cannot be managed thoroughly with individual collation and hence cannot be checked for each item otherwise a serious problem is included. Thus, it is impossible to fulfill the intended purpose of the administrative reports. In consideration of a space and a cost required for storing the administrative reports for five years sent in the form of files and searching them, the merit resulting from storing the administrative reports in the form of data is quite valuable. This means that labor and time can be more saved in the administration handling a larger number of grant cases and covering a larger number of waste generating facilities.

Next, the waste treatment information management system as a practical application of the above-explained embodiment will be described with reference to Figs. 7 to 9.

A description is made of equipment and devices required in the waste generating facility, the collecting/transporting company, the treating/disposal company, and the management center (manifest management center) to construct the above-explained system. Fig. 7 is a diagram showing an outline of the system for managing dynamic situations of wastes, the diagram for explaining flows of position information and travel information of the waste transporting vehicle.

### <<Waste Generating Facility >>

A waste source company 10 prepares a waste management seal (hazard mark kit) H and a manifest bill M₁, which contain individual data, source department data, kind of wastes, etc. put on it. Here, a two-dimensional barcode is used for describing those various data in the waste management seal H and the manifest bill M.

Also, the waste generating facility is equipped with a terminal unit (personal computer) for management of the manifest bill and the web distribution/reception.

### <<Collecting/Transporting Company>>

As shown in Fig. 8, a waste transporting vehicle 20 is provided with one set of an onboard terminal and an operating keyboard 21 for entering work situations, a communication device 22 for transmitting the manifest bill information and the travel information, a communication antenna 23 with a built-in GPS antenna for confirming the current position of the waste transporting vehicle 20, a GPS locating unit 24, and a barcode reader 25 for reading the manifest bill M and the waste management seal H which are provided from the waste generating facility. Further, an ID tag 26 capable of being read in a non-contact manner is attached to the cabin roof of the waste transporting vehicle 20, the ID tag 26 being used to monitor entry of the waste transporting vehicle 20 to a final disposal site.

In addition, a terminal unit for management of the manifest bill, the travel management, and the web distribution/reception is provided in an office of the collecting/transporting company.

Though not shown, the waste transporting vehicle 20 is equipped with a vehicle speed sensor for management of travel and work, and a panic button for risk management.

### <<Disposal Site>>

Disposal of wastes is performed in two stages, i.e., intermediate treatment in which the wastes are treated to be adapted for final filling-up through such steps as incineration, crushing, sorting and neutralization, and a final waste disposal in which the treated wastes are dumped for filling-up in accordance with the filling-up criteria. The former disposal is performed in an intermediate treatment site, and the latter disposal is performed in a final disposal site.

### << Intermediate Treatment Site>>

An intermediate treatment site 30 is equipped with a barcode reader 31 for reading the manifest bill information and the waste management information for waste receipt and disposal certification, a data communication unit 32 such as a telephone line, a packet communication line, a cellular phone line and a radio line, and a terminal unit 33 for management of the manifest bill and the web distribution/reception.

In the intermediate treatment site, there are provided a carrying-in terminal in which the waste transporting vehicle 20 unloads wastes, and a carrying-out terminal from which the wastes having been subjected to the intermediate treatment is carried out to the final disposal site.

Further, the intermediate treating company prepares a secondary manifest bill M₂ used for management of a step of carrying out the wastes having been subjected to the intermediate treatment to the final disposal site.

### <<Final Disposal Site>>

A final disposal site 40 is equipped with a terminal unit 41 in which an interface and communication software are incorporated.

In the final disposal site, a terminal dedicated for the waste transporting vehicle is provided. A vehicle sensor 45, an opening/closing gate 47, and a gate opening/closing controller 48 for opening and closing the opening/closing gate 47 are provided in an access passage to the final disposal site. Further, an ID tag reader 46 for reading information of the ID tag attached to the waste transporting vehicle 20 is provided near the opening/closing gate 47.

### <<Manifest Management Center>>

A manifest management center 60 is equipped with a host computer having the functions as follows:
1. FMS server
2. Travel management universal software (FMS)
3. Dedicated terminal PC (Client terminal PC)
4. FEP distribution control routine
5. Interface and communication software
6. Data entry screen customizer
7. Ground communication equipment for changing a system for managing carrying-in of wastes to the final disposal site

The operation of the system including the above-mentioned equipment and devices will be described below.

### <<Waste Generating Facility>>

The waste generating facility 10 delivers the manifest bill to the collecting/transporting company and pastes the waste management seal to each container of wastes.

Note that, as with a conventional manifest bill, the manifest bill M₁ is disposed of under consent among the waste generating facility, the collecting/transporting company, and the treating/disposal company.

### <<Collecting/Transporting Company>>

At the time of collecting wastes, the collecting/transporting company makes operation to read the barcode of the manifest bill and the barcode of the management seal pasted to the waste container.

The amount (including the cargo shape, weight, volume, etc.) of the wastes is also input using a ten-key numeral pad.

After the end of the collection work, manifest information is transmitted via satellite communication based on the information read in the above steps 1, 2.

Then, the company starts to transport the wastes to the treating/disposal company under commission.

During the transportation, the current position of the waste transporting vehicle is confirmed using the GPS locating system, and the confirmed position information is periodically reported to the manifest management center (at intervals of, e.g., 30 minutes) via the onboard communication device, the communication satellite and a communication center.

### << Intermediate Treatment Site>>

In the intermediate treatment site, the barcode pasted to the waste container having been carried in by the collecting/transporting company is read with a barcode reader provided therein, and the waste carrying-in information thus read is transmitted to the network center.

The intermediate treating company delivers the secondary manifest bill M₂. The barcode representing the manifest information (treatment information) is also read using the barcode reader and then transmitted to the communication center via the communication satellite.

The wastes having been subjected to the intermediate treatment by the intermediate treating company is carried to the final disposal company by the collecting/transporting company.

At the start of the transportation, the barcodes representing the manifest information and the hazard mark information are read with the barcode reader and then transmitted to the communication center via the communication satellite. The communication center transmits the received information to the manifest management center via a dedicated line.

During the transportation, as with the above case, the current position of the waste transporting vehicle is confirmed using the GPS locating system, and the confirmed position information is periodically reported to the manifest management center 60 (at intervals of, e.g., 30 minutes) via the onboard communication device, the communication satellite and the communication center.

### <<Final Disposal Site>>

In the final disposal site, an access monitor reads information of the ID tag 25 attached to the waste transporting vehicle 20, and if the incoming vehicle is confirmed as being one permitted to carry in wastes, the opening/closing gate 47 is opened to allow entry of the vehicle.

The barcodes representing the manifest information and the hazard mark information are read with a barcode reader 43 and then transmitted to the communication center 50 via the communication satellite along with the final disposal date. The communication center 50 transmits the received information to the manifest management center 60 via the dedicated line.

### <<Communication Center>>

The communication center 50 receives the position information and the travel information of the waste transporting vehicle 20 via the communication satellite, and then transmits the received information to the manifest management center 60 via the dedicated line.

### <<Manifest Management Center>>

The manifest management center receives the information from the waste transporting vehicle via the communication center 50, receives the information from the intermediate treating company and the final disposal company via the telephone line, and then processes the received information.

More specifically, the manifest management center 60 performs the following actions.
1. Receives the manifest bill information at the time of collection.
2. Receives the manifest bill information transmitted from the treating/disposal company.
3. Checks the information in above 1 and 2 for matching of data.
4. Informs abnormality to the parties concerned if the abnormality is found in the data checked for matching.
5. Distributes the travel information.
6. Distributes the data for each source department in the waste generating facility.
7. Distributes the manifest bill information.

Based on the received information, the manifest management center 60 prepares the travel route, a daily driving report, a grant record report, a transportation record report and a disposal record report, and then distributes them to the waste generating facility, the collecting/transporting company, the intermediate treating company, and the final disposal company via the Internet. Also, if necessary, the prepared data is made accessible by the third party (including, e.g., inhabitants and the relevant administrative organization).

Further, if the panic button of any of the waste transporting vehicles 20 is manipulated, the manifest management center urgently informs the parties concerned, who are previously registered, of the current position and cargo of that waste transporting vehicle, and the countermeasure to be taken, etc.

### <<SCMS II>>

SCMS II that is an improved version of the "waste electronic manifest information management system (called SCMS)", set forth above, will now be described. In SCMS II, information collection is performed based on information directly indicating dynamic situations of waste transporting vehicles instead of reading barcodes. In other words, SCMS II can be implemented by setting an onboard terminal for satellite communication, which is used in SCMS, in each of permitted waste transporting vehicles and then doing works in the same manner as in SCMS. More specifically, information regarding dynamic situations of the waste transporting vehicle is collected by adding, to each waste transporting vehicle used in SCMS so far, the function of sensing actuation of a loading device with a sensor at the time of loading wastes on the vehicle and then transmitting sensed information to the manifest management center of SCMS via the communication satellite, the function of sensing dumping or unloading operation performed for disposal of the wastes that have been carried into an incineration facility, and then transmitting sensed information to the manifest management center via the communication satellite, and other functions.

Waste management in accordance with SCMS II is automatically performed at a network center [SCOM management center (e.g., Niscom Co., Ltd. in Japan)] using the satellite communication system. Data regarding when and where the waste transporting vehicle has collected wastes and when and where the waste transporting vehicle has unloaded the collected wastes, etc. is obtained using the satellite communication system (SCMS II). The obtained data is automatically subjected to matching work in a computer so as to check whether respective items of the obtained data are matched with the preset management information and conditions. Illegal dumping of wastes is thus prevented by monitoring the occurrence of problems such as "waste dumping outside designated area" and "improper mixing of wastes".

### <<Gate Management System in Final Disposal Site>>

The present invention is featured in that a gate management system 44 is provided in the final disposal site in addition to the basic construction described above. The construction of the gate management system 44 will be described below.

Fig. 9 is a schematic view of the gate management system 44 provided in an access passage to the final disposal site. The gate management system 44 in the final disposal site comprises a terminal unit 45, a vehicle sensor (not shown) for sensing the direction in which a vehicle passes, an ID tag reader 46 vertically provided at a side of the access passage, a gate opening/closing controller 48, and an opening/closing gate 47 opened and closed by the gate opening/closing controller 48. The gate opening/closing controller 48 has the function of determining whether the vehicle is a permitted one or not, based on data read by the ID tag reader 46, and the function of setting a monitoring time. Further, the gate opening/closing controller 48 is connected to the network center (manifest management center) 60 via an interface 45 for transmitting the vehicle number, gate passage information and usage information of the particular ID to the network center.

Moreover, the gate opening/closing controller 48 is designed to be able to remotely set the entry allowed time zone, addition and deletion of permitted vehicles, etc. in response to an instruction from the relevant self-governing community.

The thus-constructed gate management system 44 in the final disposal site operates as follows.
1. The ID tag reader reads the ID of a vehicle that has stopped at the opening/closing gate. When the stopping vehicle is a permitted one, the opening/closing gate is opened to allow entry of that vehicle. If the stopping vehicle is one provided with no ID tag 25 or has the ID not permitted, the opening/closing gate 47 is not opened to block entry of that vehicle.
2. Passage record data (date, time and the vehicle ID) is notified to the network center for each passage of the vehicle along with usage information of the special ID, and so on.
3. The network center totalizes and manages the number of passages through the gate for each vehicle.

The above description has been made in connection with routine waste disposal. In exceptional waste disposal, for special vehicles (heavy equipment such as shovels and excavators) which enter the final disposal site frequently, a not-easily removable ID tag 25 (special ID tag) is attached to each of those vehicles, and each entry of the vehicle to the final disposal site is checked using the special ID tag. Checked data is reported to the relevant self-governing community. When vehicles must be allowed to enter the site for urgent purpose, several special ID tags are prepared to allow the entry of the vehicles based on those special ID tags. Usage situations of the special ID tags 25 are managed by the center and then reported to the relevant self-governing community per month.

### Industrial Applicability

The invention set forth in each of claims 1 to 6 can provide an infectious-waste treatment information management system capable of managing infectious wastes in terms of net weight for each waste source in the waste generating facility. It is possible to provide data effectively used for separation of the infectious wastes, reduction in amount of the generated wastes, and business management of the waste generating facility, and data for administrative reports, and to confirm position information (e.g., position information indicating where the infectious wastes are transported at present, whether they are already carried into the treatment factory, and whether treatment of the infectious wastes is completed, as well as the transport route) regarding individual units of the infectious wastes (each of containers or waste transporting vehicles) per waste source on a map in real time. As a result, the problems such as illegal dumping can be overcome.

The wastes under special control have potentiality imposing adverse effects upon human bodies and environments, and should be all treated in a reliable and proper manner. Hitherto, the wastes under special control, including medical wastes, have been distinguished from other general wastes and conveyed over a dedicated treatment route under special control. Then, waste management has been performed by checking the number of sealed-off containers transferred during collection and transport, or by checking the number of waste transporting vehicles in the case where a large amount of wastes are generated at a time, such as waste materials generated in the building field.

For example, by using a dedicated bill prepared per hospital that is a waste generation place and a waste collection place, the number of sealed-off containers can be checked per waste collection place at the time of carrying-out from the waste collection place and at the time of carrying-in to a disposal/treatment facility. In the event that the sealed-off container containing the wastes to be treated and disposed of under special control is replaced with another container containing general wastes, etc. by an intention or a mistake during transportation, for example, it is possible to find such replacement. It is possible to suppress illegal treatment, such as loss of the sealed-off container by a mistake or illegal disposal, during transportation of the wastes under special control, and to exactly and promptly detect and cope with false treatment if occurs.

Further, since data regarding the generation place and the collection place of the wastes under special control is recorded using a two-dimensional barcode, additive information regarding the wastes under special control can be recorded. Therefore, the wastes under special control can be managed in a more reliable manner.

According to the invention set forth in each of claims 7 to 10, monitoring means monitors a travel state of the waste transporting vehicle, transport situations of the waste transporting vehicle and arrival to the final disposal site can be managed in real time in a centralized manner. Also, since the monitoring means monitors an abnormality in passage time along the transport route of the waste transporting vehicle (i.e., because of time management with respect to transportation), it is possible to surely monitor that the waste transporting vehicle is in an abnormal situation, e.g., an accident, and to make risk management. In such a situation, the system management center can give a necessary instruction.

By correcting the estimated passage time scheduled for a certain point based on traffic information in that day, time management for the transportation can be realized with higher accuracy. In some cases, by resetting the shortest route in time up to the object place as a new transport route to avoid a traffic jam, the work time can be cut.

The wastes carried into the final disposal site can be managed based on the travel track of the waste transporting vehicle. Further, with the provision of a gate management system in the final disposal site, it is possible to manage the carrying-in time, to identify the incoming vehicle, and to prevent illegal dumping.

Since the management information is distributed via the Internet, the information can be made open to the public as required, and hence a sense of unease among inhabitants can be moderated.

The present system is a system of transmitting information of each manifest bill to the manifest management center at the time of loading wastes. In an emergency case, therefore, the place where an accident has occurred, the kind and amount of cargo, countermeasures, actions to be taken, etc. can be automatically informed to the parties concerned, who are registered in advance.

## Claims

1. A waste treatment information management system for collecting information on a flow of waste treatment using satellite communication, thereby enabling management of the waste treatment among a waste generating facility, a collecting/transporting company, and an intermediate treating company, and thereby rapidly preparing and providing necessary information from the information collected, wherein a two-dimensional barcode label and a cargo bill are employed in a combined manner, the cargo bill containing necessary items described therein according to the related information including the two-dimensional barcode, which has been input to a terminal for the satellite communication.

2. A waste treatment information management system according to Claim 1, wherein the two-dimensional barcode label is a label prepared in advance to indicate a two-dimensional barcode representative of data regarding a collection place and a generation place and attached to a container for wastes under special control or a waste transporting vehicle.

3. A waste treatment information management system using a communication satellite according to Claim 2, wherein data of measured weight of said container or said waste transporting vehicle is input together with the information of the two-dimensional barcode.

4. A waste treatment information management system according to any one of Claims 1, 2 and 3, wherein the two-dimensional barcode label includes a mark positioned near the two-dimensional barcode and representing the wastes under special control.

5. A waste treatment information management system according to any one of Claim 4, wherein said mark representing the wastes under special control is a mark representing infectious wastes.

6. A waste treatment information management system according to any one of Claim 5, wherein said mark representing the wastes under special control is a bio-hazard mark.

7. A system for managing dynamic situations of wastes using a two-dimensional barcode, the system comprising position measuring means for measuring a position of a waste transporting vehicle transporting the wastes, and monitoring means for monitoring a transport state of a waste transporting vehicle based on the positione measured by said position measuring means, wherein when the position measuring means measures the position of the waste transporting vehicle transporting the wastes, the monitoring means monitors the transport state of said waste transporting vehicle based on the measured position, thereby managing travel situations of said waste transporting vehicle and arrival to a disposal site in real time in a centralized manner.

8. A waste treatment information management system according to Claim 7, further comprising monitoring means provided in the disposal site for monitoring said waste transporting vehicle.

9. A waste treatment information management system according to any one of Claims 7 and 8, wherein said monitoring means provided in the disposal site for monitoring said waste transporting vehicle comprises an ID tag attached to said waste transporting vehicle and an ID tag reader provided in an access passage to the disposal site.

10. A waste treatment information management system according to any one of Claims 7 to 9, further comprising an opening/closing gate which is opened and closed in accordance with a result of reading said ID tag.
